(19)

Europäisches
Patentamt
European
Patent Office
Office européen
des brevets

(11) **EP 2 618 192 A1**

(12) **EUROPEAN PATENT APPLICATION**

(43) Date of publication:
**24.07.2013 Bulletin 2013/30**

(51) Int Cl.:
*G02B 6/287* (2006.01)     *H01S 3/067* (2006.01)

(21) Application number: **13000270.2**

(22) Date of filing: **18.01.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **20.01.2012   US 201261588754 P**

(71) Applicant: **Laser Zentrum Hannover E.V.
30419 Hannover (DE)**

(72) Inventors:
• **Hausmann, Katharina
  31141 Hildesheim (DE)**
• **Pelegrina Bonilla, Gabriel
  30419 Hannover (DE)**
• **Sayinc, Hakan
  30163 Hannover (DE)**

(74) Representative: **Friedrich, Andreas et al
Gramm, Lins & Partner GbR
Patent- und Rechtsanwaltssozietät
Theodor-Heuss-Strasse 1
38122 Braunschweig (DE)**

(54) **Method for manufacturing a coupling arrangement, coupling arrangement and amplifier**

(57)     The inventions relates to a method for manufacturing an asymmetric coupling arrangement (20) for coupling light of one second wavelength from a single mode pump fibre at the pump wavelength (2) into a single mode signal fibre at the signal wavelength (8),
- wherein the single mode pump fibre at the pump wavelength (2) and the single mode signal fibre at the signal wavelength (8) are different from one another,

- wherein the method comprises the following steps:
a) pre-tapering the single mode pump fibre at the pump wavelength (2) or the signal fibre at the signal wavelength (8) according to a predetermined pre-taper parameter in order to arrive at matched propagation constants for the two fibres at either the signal or the pump wavelength;
b) connecting the pump fibre (2) and the signal fibre (8), preferably by fusion.

Fig. 1

**Description**

**Field of the invention**

The present invention relates to a method for manufacturing a coupling arrangement for coupling light of one second wavelength from a pump fibre into a signal fibre, wherein the pump fibre and the signal fibre are different from one another. The invention also relates to such a coupling arrangement and to an all-fibre core pumped Thulium-doped fibre amplifier comprising such a coupling arrangement.

**Background of the invention**

Coupling arrangements of the aforementioned kind are useful for different applications. In order to fabricate these coupling arrangements one usually fuses the pump fibre and the signal fibre together. A well-known prior art technique to do so is the so called Fused Biconical Taper (FBT) technique which is known for example from B.S. Kawasaki, K.O. Hill and R.G. Lamont, Biconical-taper single-mode fiber coupler, Opt. Lett 6, 327-328 (1981). This technique is commonly used to produce Fused Fibre Couplers (FFC).
However, other techniques have also been used to connect the fibres in a coupling arrangement.
A FFC is for example used to couple light guided in the core of a single-mode fibre into the core of another single-mode fibre with identical or at least similar parameters, e.g. the cutoff wavelengths. Usually an FFC is built up from identical fibres. The resulting FFC shows a strong wavelength dependence of the coupling, which means such an FFC works as a narrow-band coupler.
In order to get a so called wavelength-flat coupler or wavelength-flattened coupler it is known from some publications (e.g. Mortimore, DB (1985), Wavelength-flattened fused couplers, Electronic Letters, 21 (17), 742 and US-patent 4,798,436) to taper one of the fibres before applying the FBT technique. By tapering a fibre the propagation constant of this fibre is being changed relative to the propagation constant of the fundamental mode of the other fibre. Only if there is a difference in the propagation constants of the two fibres it is possible to achieve a wavelength-flat FCC by FBT technique. However, if the difference is too big, it is not possible to get an FCC by FBT technique at all.
In some applications there is a need to couple light of one wavelength into a fibre which is a single-mode fibre at another wavelength but multimode at the wavelength that is to be coupled in. One example for such an application is the core pumping of a Thulium doped fibre (TDF) with single-mode laser light of a wavelength of about 795 nm which corresponds to an absorption maximum of a TDF.
Lasers based on Thulium doped fibres extend the accessible wavelength towards the eye-safe region of about $2 \, \mu m$. The absorption spectrum of thulium shows mainly three maxima at 1630 nm, 1210 nm and 795 nm. The absorption maximum at a wavelength of 795 nm has a nearly twice as large absorption cross section as the other two absorption maxima. In addition to this higher absorption, pumping the TDF with light with a wavelength of 795 nm is favourable because there is the possibility of direct core pumping by laser diodes.
From chapter 4 of the PhD-thesis of Marcin Michal Kozak (Development of Thulium-Doped Fluoride Fiber Amplifiers, Braunschweig, 2005, published by Cuvillier, Göttingen, 2006) fibre couplers for Thulium doped fibre amplifiers are known. With these couplers light with a wavelength of about 805 nm is coupled into the core of a fibre, which guides light single-mode at wavelengths of about 1470 nm and/or 1850 nm. These couplers consist of two fibres which are both identical single-mode fibres with a cut-off wavelength of about 1230 nm. Hence these fibres act as multimode fibres at a wavelength of about 805 nm. Due to this multimode character these couplers have a high excess loss.
Kozak states that ideally fibres should be used which are single-mode at both wavelengths; however such fibres are not available. Alternatively, different fibres should be used which are single-mode at different wavelengths. These fibres could for example be made from different glass compositions, which according to Kozak leads to massive problems in the manufacture of the coupler. Hence, the coupling described by Kozak is not high efficient due to the multimode character of the pump fibre at the pump wavelength.
Efficient single-made side coupled core pumping of a long wavelength single-mode fibre with a short wavelength single-mode laser light is not known.
It is hence an object of the present invention to provide a coupling arrangement for coupling light of one second wavelength from a pump fibre efficiently into a signal fibre, wherein the pump fibre and the signal fibre are different from one another.
It is a further object of the present invention to provide an all fibre core pumped Thulium doped fibre amplifier comprising such a coupling arrangement.
It is a further object of the present invention to provide a method for manufacturing such a coupling arrangement.

## Summary of the invention

A method for manufacturing an asymmetric coupling arrangement for coupling light of one second wavelength from a pump fibre efficiently into a signal fibre, wherein the pump fibre and the signal fibre are different from one according to the present invention comprises the following steps:

a) pre-tapering the pump fibre or the signal fibre according to a predetermined pre-taper parameter;

b) connecting the pump fibre and the signal fibre.

Preferably the pump fibre is a single-mode fibre for light having the second wavelength.

In a preferred embodiment the signal fibre is a single mode fibre for light having the first wavelength but is a multimode fibre for light having the second wavelength.

In a preferred embodiment of the method the pump fibre and the signal fibre are connected by fusing them together using the Fused Biconical Taper (FBT) Technique.

The pump fibre and the signal fibre are fused together. The coupling region is also called interactive waveguide region. In order to be able to transfer the light having the second wavelength from the pump fibre into the signal fibre which is single-mode for light having the first wavelength it is necessary to change the propagation constant of the fundamental mode of one of the fibres. This is done by the pre-tapering In step a) and results in a matching of the propagation constants in the interactive waveguide region and therefore in the successful multiplexing of the two light fields with a high coupling ratio.

The changing of the propagation constant of the fundamental mode for one of the two fibres is already known for the already mentioned wavelength-flattened couplers. However those couplers consist of equal fibres which means that changing the propagation constant of the fundamental mode of one of the two fibres results in a mismatch of the propagation constants in the interactive waveguide region. This leads to the desired broad spectral response of the wavelength-flattened couplers. For this process an exact knowledge of the correct and precise pre-tapering amount or the pre-taper parameter is not necessary. A simple mismatch by detuning one of the propagation constants is sufficient to realize a wavelength-flattened coupler.

In contrast to this the exact pre-taper parameter has to be known precisely in a method according to the present invention. It can be determined in different ways.

In a preferred embodiment of the present invention the pre-taper parameter is predetermined by performing simulations using a simulation model. Such a simulation model allows to calculate the pre-taper length for matching the propagation constants of the signal fibre and the pump fibre in the interactive region, the so called coupling region. Ideally the model should be applicable for arbitrary wavelengths and single-mode fibres.

Consider a directional coupler with two non-identical single-mode fibres supporting the fundamental mode with the propagation constants $\beta_1$ and $\beta_2$, respectively. The propagation constant depends on the effective refractive index and the wavelength of the input radiation. For unity power launched into the first fibre (index 1) at length z=0, the power distribution between the first fibre and the second fibre (index 2) at any position z of the coupler is given by

$$P_1(z) = 1 - \frac{\kappa^2}{\gamma^2}\sin^2 \gamma z \qquad\qquad (1)$$

$$P_2(z) = \frac{\kappa^2}{\gamma^2}\sin^2 \gamma z \qquad\qquad (2)$$

$$\gamma^2 = \kappa^2 + \frac{(\Delta\beta)^2}{4} \qquad\qquad (3)$$

$$\Delta\beta = \beta_1 - \beta_2. \qquad\qquad (4)$$

Here, $\kappa$ is a measure of the coupling strength and is called coupling coefficient. It depends on the fibre parameters, the separation of the cores and the operation wavelength. The difference of the propagation constants $\Delta\beta$ is referred to as the phase mismatch. For the special case of a symmetric coupler made from two identical fibres ($\beta_1 = \beta_2$) the phase mismatch is zero and hence $\gamma = \kappa$. The equations (1) and (2) in this case reduce to

$$P_1(z) = \cos^2 \gamma z \qquad \text{and} \qquad P_2(z) = \sin^2 \gamma z\,.$$

Hence, the input power is completely transferred periodically between the two fibres. For an asymmetric coupler made from two non-identical fibres the phase mismatch is non-zero ($\Delta\beta\neq 0$). In this case a total power transfer between the two fibres is not possible and just a fraction of the input power is coupled from one fibre (pump fibre) to the other fibre (signal fibre). To make a complete power transfer possible the propagation constants have to be matched, e.g. by the already mentioned pre-tapering of one of the two fibres.

In a preferred embodiment of the present invention the simulation model is a 2-dimensional model based on the finite-difference beam propagation method. Assuming a 2-dimensional model strongly reduces the necessary computing time. The simulation can be performed using a commercially available simulation program such as BeamPROP by RSoft.

Preferably in the simulation model both the core-cladding interface and the cladding-air interface are considered. This preferably includes the two interfaces for both fibres. Chiang (Opt. Lett. 12, 431-433(1987)) demonstrated that the effect of the core-cladding interface of the respective fibre is not negligible. Neglecting this interface would lead to intolerable errors. In addition a parabolic taper shape is assumed and the glass volume in the simulation model is conserved to calculate the diameter of the taper waist. This taper waist depends on the taper elongation which is also called extension and on the so called hot zone $\Delta z$ (W.K. Burns, M. Abebe, and C.A. Villarruel, Appl. Optics 24, 2753-2755 (1985)). The hot zone corresponds to the region which is softened during the heating process of the FBT method.

These assumptions have been verified experimentally by pulling various tapers with different taper elongations. By this pulling also the length of the hot zone has been determined. A fitting of the experimental data lead to a $\Delta z \approx$ 7mm. The diameter of the separation of the cores is assumed to be directly proportional to the respective diameter of the cladding, which can preferably be experimentally verified by SEM images of the taper cross section at the cleaved taper waist.

Preferably a fusion aspect ratio F can be implemented in the simulation model to take into account the overlap of the fibres during the fabrication process. In the case of an asymmetric coupler the diameter of the tapered pump fibre and the tapered and/or pre-tapered signal fibre differ. Performing simulations with such a model leads to a specific value for the pre-taper parameter which has been shown to be a quite good approximation of the optimal value.

Of course, the optimal value of the pre-taper parameter can also be determined experimentally by comparing the coupling efficiencies of coupling arrangements with different pre-taper parameters. It can be especially advantageous to use a simulation model to roughly estimate the pre-taper parameter by performing simulations and to vary the estimated pre-taper parameter slightly in an experimental way. Due to the assumptions and estimations of the simulation model, the optimum pre-taper parameter can slightly differ between the simulations and experiments. In order to maximize the achievable coupling ratio, the performed pre-tapering was optimized by slightly varying and adjusting the experimentally applied pre-taper amount.

In a preferred embodiment of the present invention both the pump fibre and the signal fibre are twisted and fused with a special high-temperature flame. During the fusing process the fibre-pair consisting of the pump fibre and the signal fibre is simultaneously pulled at a slow speed in order to achieve a smooth adiabatic taper.

In a preferred embodiment of the present invention an output at the fibre ports is monitored online during the fabrication process. This means that during the tapering of the pump fibre and the signal fibre during the FBT method the coupling ratio or coupling strength is monitored. Due to the real-time monitoring the pulling process can be stopped at the desired target coupling ratio and no detailed knowledge about the extension of the tapering is needed.

A coupling arrangement according to the present invention is a coupling arrangement for coupling light of a second wavelength from a pump fibre into a signal fibre, wherein the pump fibre and the signal fibre are different from one another and wherein the propagation constants of the pump fibre and the signal fibre match in an interactive region.

Preferably, the signal fibre is a single-mode fibre for light having the first wavelength but is a multimode fibre for light having the second wavelength,

Preferably the pump fibre is a single-mode fibre for light having the second wavelength. In a still preferred embodiment the pump fibre is a multimode fibre for light having the first wavelength.

The matching of the propagation constants in the interactive region leads to a very efficient transfer of power from the pump fibre into the signal fibre. Hence a successful multiplexing of the two light fields with a high coupling ratio is achieved.

Preferably the first wavelength and the second wavelength are between 400 nm and 2300 nm, preferably between 400 nm and 2100 nm, more preferably between 633 nm and 2000 nm, yet more preferably between 795 nm and $2\mu m$. In this case the coupling arrangement can be used to pump Thulium doped fibre lasers.

The achieved coupling ratio is preferably larger than 70 %, more preferably larger than 80 %, and especially preferably larger than 85 %. In very advantageous embodiments the coupling ratio is larger than 90 %. This means that more than the respective amount of the pump light, which is the light at the second wavelength guided in the pump fibre, is coupled into the signal fibre. The same values hold for the transmission of the coupling arrangement. In this context the transmission of the coupling arrangement is to be understood as the percentage of the single-mode guided light of the first wavelength In the signal fibre which passes the coupler and still is guided in the signal fibre. A combination of these two parameters leads to a coupling arrangement in which most of the light from the pump fibre is transferred into the signal fibre while most of the light in the signal fibre stays in the signal fibre and is not transferred into the pump fibre. A sufficient combination is for example a coupling efficiency of more than 70 % while the transmission is higher than 80 %.

An all-fibre core pumped rare earth doped amplifier comprises a coupling arrangement according to the present invention. The amplifier preferably consists of a rare earth doped fibre, a single mode pump diode and a cw seed source. In a preferred embodiment the single-mode pump diode and the cw seed source operate at wavelengths of 795 nm and 1980 nm, respectively. Preferably the amplifier is a Thulium doped fibre (TDF) amplifier. However it is also possible to use other rare earth elements, such as Holmium for example to dope the fibre, which has a slightly larger laser wavelength than Thulium.

For all the aforementioned embodiments of the present invention it is possible to choose the second wavelength of the pump light to be smaller than the first wavelength of the light guided in the signal fibre. Of course, it is also possible, that the second wavelength of the pump light is larger than the first wavelength of the light guided in the signal fibre. Fore the usability of the asymmetric coupling arrangement it is important that both the light having the first wavelength and the light having the second wavelength are in the signal fibre after having passed the coupling arrangement. This means, that independent from the wavelength it is important that the light having the first wavelength, which is guided in the signal fibre, stays in the signal fibre, while the light having the second wavelength, which is guided in the pump fibre, is transferred into the signal fibre.

**Brief description of the figures**

Fig. 1 - shows schematically the situation modelled by the simulation model;

Fig. 2 - shows the calculated effective refractive index $n_{eff}$ of the fundamental mode in different fibres;

Fig. 3 - shows results of performed simulations for the coupling ratio as a function of the pre-taper parameter and the extension of the tapering;

Fig. 4 - shows simulation results for the power transmission as a function of the extension of the tapering;

Fig. 5 - shows experimentally measured power transmission as a function of the extension of the tapering;

Fig. 6 - shows a schematic setup for an amplifier according to an embodiment of the present invention;

Fig. 7 - shows the gain of the amplifier shown in Fig. 6; and

Fig. 8 - shows a schematic view of a coupling arrangement according to an embodiment of the present invention.

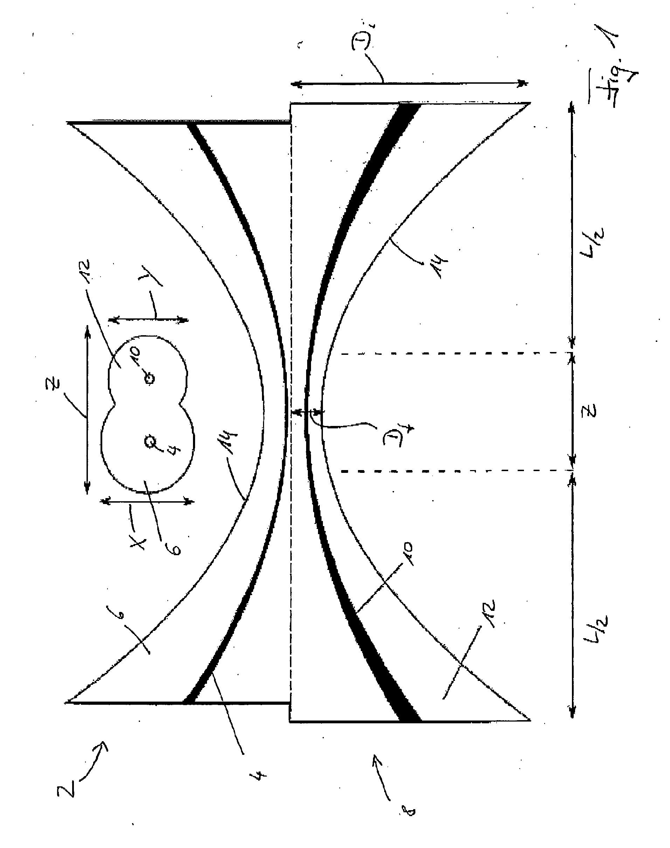

Figure 1 schematically shows the situation modelled by the simulation model. In the upper part a pump fibre 2 is shown. It consists of a pump fibre core 4 and a pump fibre cladding 6. The pump fibre 2 is coupled to a signal fibre 8 consisting of a signal fibre core 10 and a signal fibre cladding 12. In the model the interfaces between the cores 4, 10 and the respective claddings 6, 12 and the interfaces between the claddings 6, 12 and the surrounding air are considered. In the situation shown In Figure 1 the signal fibre 8 is pre-tapered.

Both fibres 2, 8 are assumed to be fused along a straight line but show taper shape 14 that is assumed to be parabolic. The area shown in Figure 1 is formed by the taper elongation L which is split into two parts of equal size L/2. Between these two parts the hot zone z is located, which corresponds to the region which is softened during the heating process.

The inset in Figure 1 again shows the pump fibre core 4, the pump fibre cladding 6, the signal fibre core 10 and the signal fibre cladding 12 in a cross section. Here it becomes clear that in the case shown in Figure 1 the pump fibre 2 has a smaller diameter than the signal fibre 8. With the three dimensions X, Y and Z shown in the inset the fusion aspect ratio F=2 Z/(X+Y) can be calculated. Based on experimental measurements by light microscope images of the cross section of the cleaved taper waist the fusion aspect ratio is assumed to be F=1.3.

At the taper waist the signal fibre 8 has a taper waist diameter $D_f$ which is smaller than the diameter $D_i$ of the untapered signal fibre 8.

In the following an example is described in which different single-mode fibres for the pump wavelength of 795 nm and the signal wavelength of 2 $\mu$m are employed. As the pump fibre 2 the 780-HP with a mode field diameter of 5 $\mu$m and a numerical aperture of 0.13 is used, while the signal fibre 8 is a SM2000 with a mode field diameter of 13 $\mu$m and a numerical aperture of 0.11. As the fibre parameters differ, the propagation constants of both fibres will not match in the coupling region. So matching by pre-tapering one fibre, in this case the signal fibre 8 is necessary.

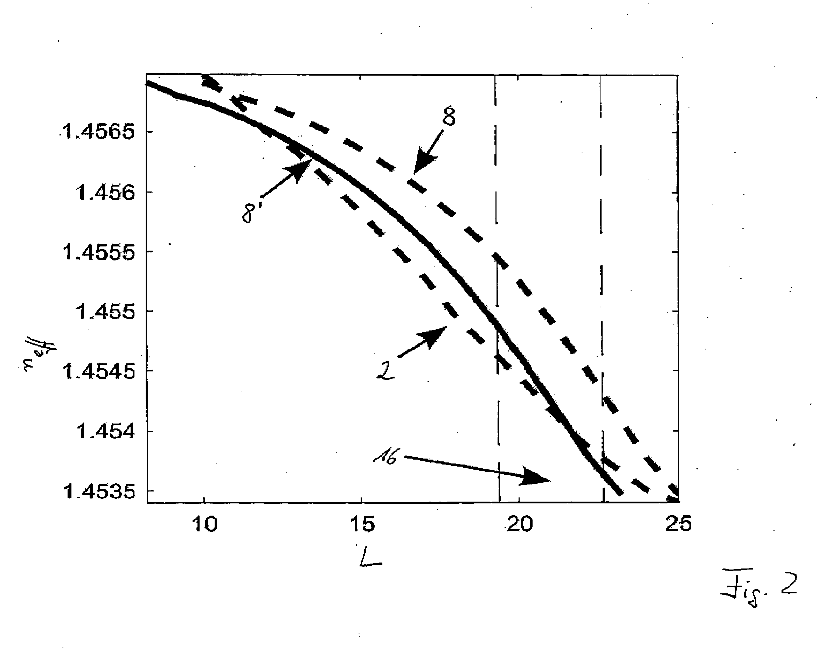

First the parameter space has to be confined to save computing time. Figure 2 shows the calculated effective refractive index $n_{eff}$ of the fundamental mode of the respective fibre as a function of the extension or elongation L In mm of the tapering. The two dashed lines show the refractive index for the pump fibre 2 and the untapered signal fibre 8, respectively. In the shown example the pre-taper parameter was determined to be 1.8 mm. This pre-tapering leads to a modified effective refractive index, which is shown for the pre-tapered signal fibre 8' as a solid line. In the coupling region 16 the lines for the refractive index for the per-tapered signal fibre 8' and for the pump fibre 2 intersect. The coupling region 16 is identified to be from an elongation L of about 19 mm to about 23 mm.

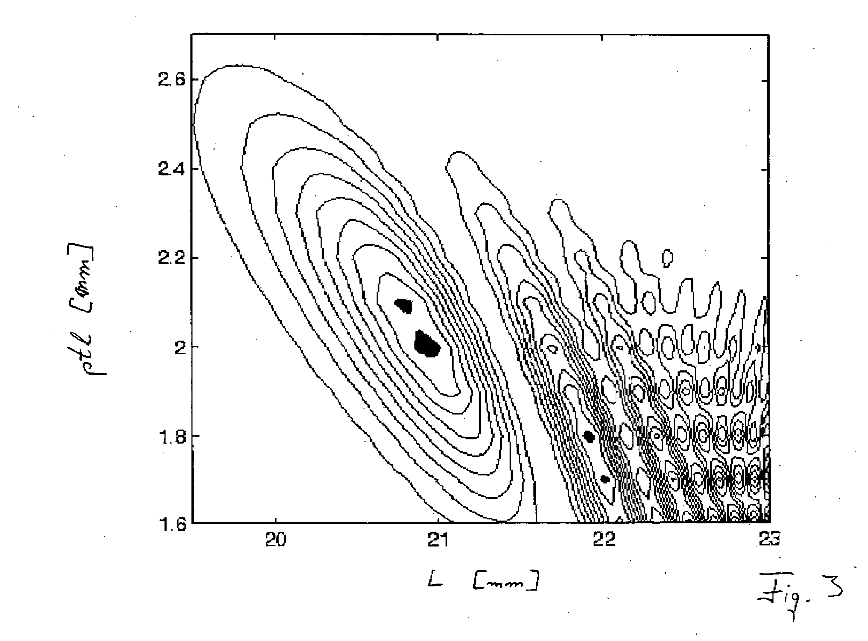

Simulation results are depicted in Fig. 3, which show the coupling ratio of the pump power to the signal fibre 8 as a function of the elongation L and the pre-taper length ptl. Each line is a line of equal coupling ratio. The difference between two neighboring lines in the respective coupling ratio is 10 %. The outermost lines of the closed regions indicate a coupling ratio of 10 %; next lines indicate a coupling ratio of 20 % and so on.

The simulation reveals a maximum at a pre-taper length of 2.1 mm with a ratio of nearly 90%. Other maxima of the coupling ratio can be observed at higher values of the extension and lower values of the pre-taper length. However, the first maximum is broader and the decay is less steep than those of the other maxima, which facilitates the fabrication of the FFC. In addition to a high coupling ratio of the pump power to the signal fiber 8, a high transmission must be maintained for the signal power in the signal fiber 8. Therefore, we simulated the transmission of the pump and signal power in the signal fiber for a pre-taper length of 2.1 mm and varying extension.

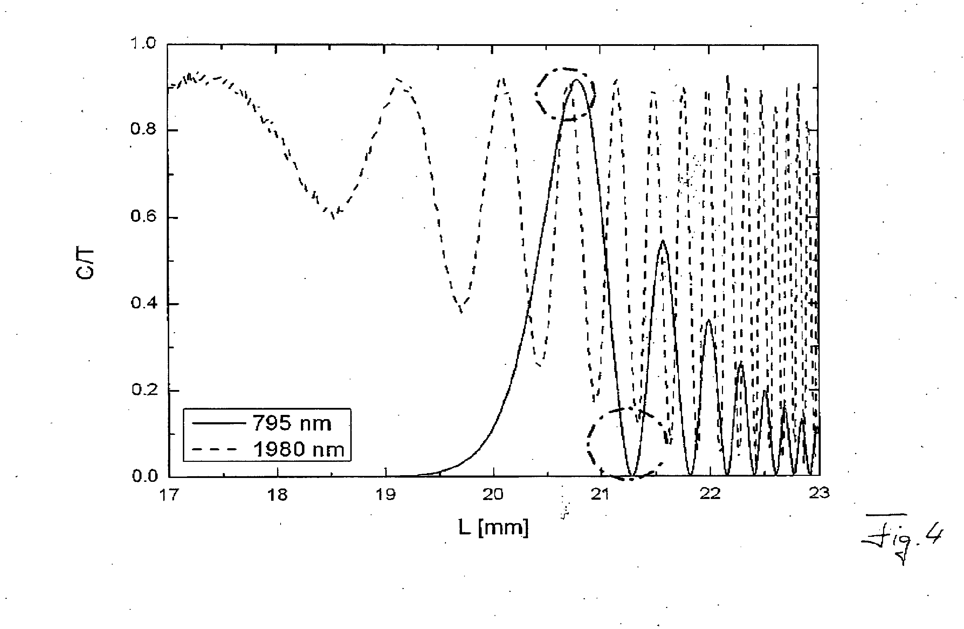

The results for a pre-taper length ptl of 2.1 mm are shown in Fig. 4 and demonstrate that a maximum for power of both wavelengths is located in the signal fiber 8 at the first maximum of the pump power. The first line denoted with "795 nm" shows the coupling ratio C which illustrates how much of the light of the second wavelength guided through the pump fibre 2 is coupled into the signal fibre 8. The second line denoted "1980 nm" shows the transmission T of the coupling arrangement for light of the first wavelength guided through the signal fibre 8. It starts with a transmission of about 90 % at an elongation L of 17 mm. The upper dashed circle indicates the area where coupling ratio C for the light of the second wavelength of 795 nm and transmission T for the light of the first wavelength of 1980 nm are high. The lower dashed circle shows a region where both the transmission T and the coupling ratio C are low. These would lead to a transfer of light from the signal fibre into the pump fibre.

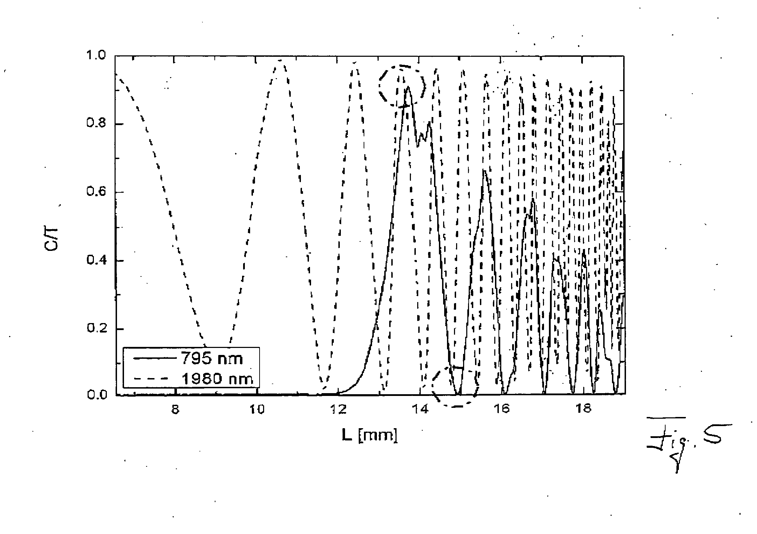

Based on these simulation results, FFCs were fabricated, identifying a pre-taper length ptl of 1.8 mm as optimum value. Figure 5 shows the experimentally recorded transmission of the pump and signal power in the signal fiber 8 of a FFC with a pre-taper length ptl of 1.8 mm. Therefore, the fibers were pulled beyond the point of optimum elongation L, while the transmission was monitored to demonstrate the coupling behaviour. As predicted in the numerical simulations both wavelengths have a maximum of their transmission and coupling ratio, respectively, at nearly the same elongation L. This is shown in the upper circle in Fig. 5 at an elongation L of roughly 13 mm. However, the value of the extension at the maximum differs between the simulation and the experiment. This can be explained by fabrication parameters that have not been considered by the 2D simulation model, e.g. the drilling or the non-linearly pulling speed and fusion aspect ratio in the tapering process. Although the extension differs, the measured curve progression is qualitative the same as the simulated one, so that the experimental results are qualitatively in good agreement with the numerical results. This agreement indicates that the simulation model has the potential to be extended for any wavelength pairs and any pairs of SM fibres of an asymmetric FFC.

Figur 5 shows a second circle at about an elongation L of roughly 15 mm. At this position both wavelengths have an minimum of their transmission and coupling ratio, respectively. This means that the coupling ratio C for the light of the second wavelength of 795 nm is close to zero, so that nearly all of this light stays in its original fibre, which is the pump fibre in this case. In addition, also the transmission T for the light of the first wavelength of 1980 nm is close to zero, which means, that most of this light is transferred from its original fibre, which is the signal fibre, into the pump fibre. Hence, also with this elongation and pre-tapering, a more or less complete transition of the electromagnetic radiation of one fibre into the other fibre can be obtained. With the present invention it hence becomes possible to manufacture an asymmetric coupling arrangement consisting of two different fibres guiding electromagnetic radiation of different wavelengths. In addition in becomes possible to achieve a very good coupling, so that after having passed the asymmetric coupling arrangement the light of both wavelength to a very good extent is guided in one of the two fibres. As can be seen in figure 5 it is also possible to choose the fibre, in which the light of both wavelength is guided after having passed this arrangement by choosing and adjusting the pre-taper length and the respective elongation during the fusing.

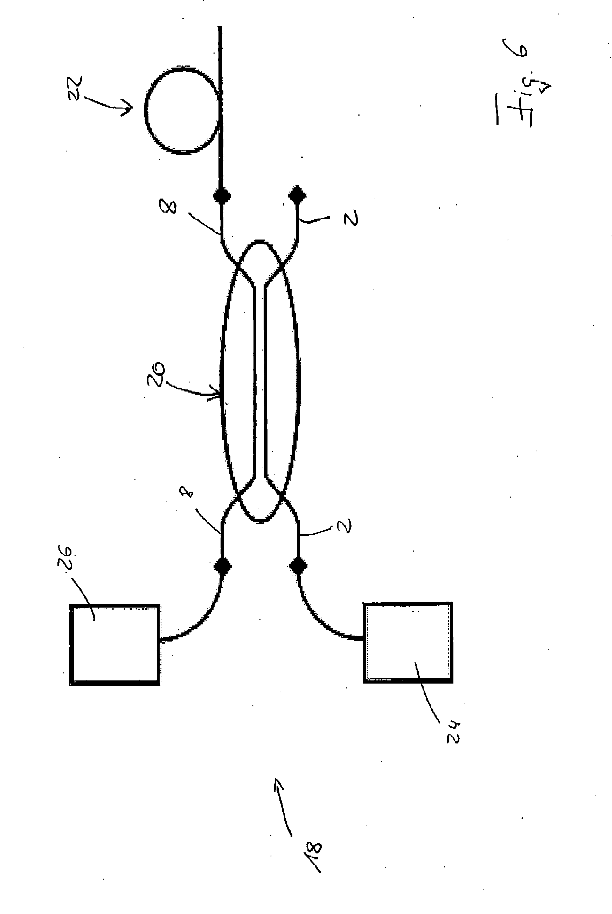

Figure 6 schematically shows an all-fiber core pumped Thulium doped fibre (TDF) amplifier 18. The amplifier 18 setup consists of the coupling arrangement 20 (FFC), a TDF 22, a single-mode pump diode 24 and a cw seed source 26 operating at wavelengths of 795 nm and 1980 nm, respectively. At a seed power of 0.8 mW and a pump power of 70 mW the seed signal was amplified to 2.5 mW. The maximum achievable gain in this configuration was 5 dB, which was limited by the pump power of the commercially available laser diodes 24. On the right side of the coupling arrangement 20 (also called wavelength division multiplexer WDM) both the light coming from the pump diode 24 and from the seed source 26 are guided through the signal fibre 8, which is the upper fibre leading to the TDF 22. In future, higher amplification factors should be possible with the availability of high-power SM laser diodes in the wavelength range of 800 nm.

Due to the present invention it is possible to build an all-fibre core pumped Thulium doped fibre (TDF) amplifier 18 as shown in Figure 6.

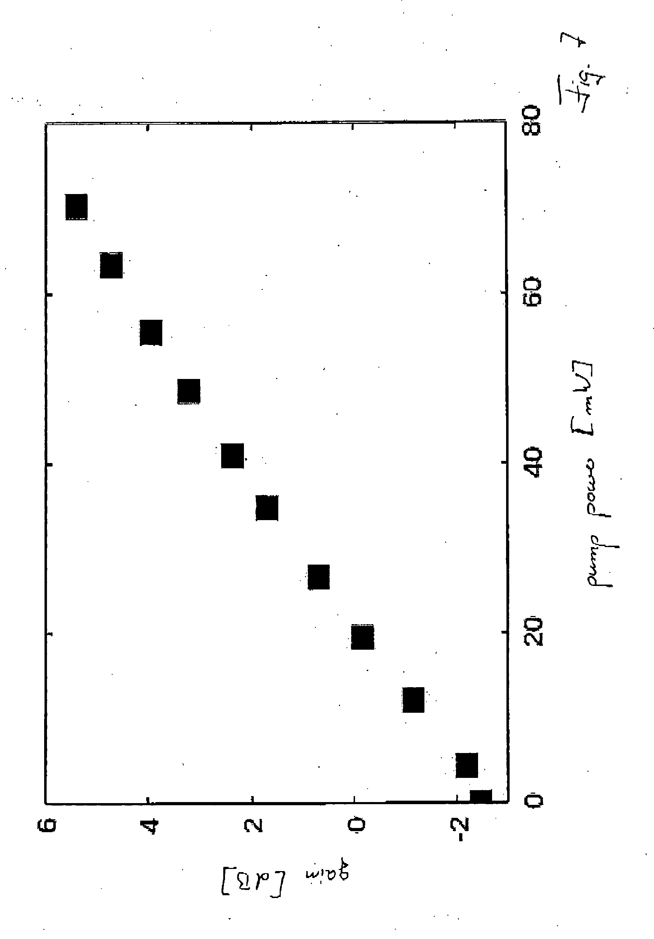

Figure 7 shows the gain of the amplifier 18 shown in Figure 6 as a function of a pump power which is the power of the pump diode 24 which is the first light source in Figure 6. It emits light at the second wavelength of 795 nm.

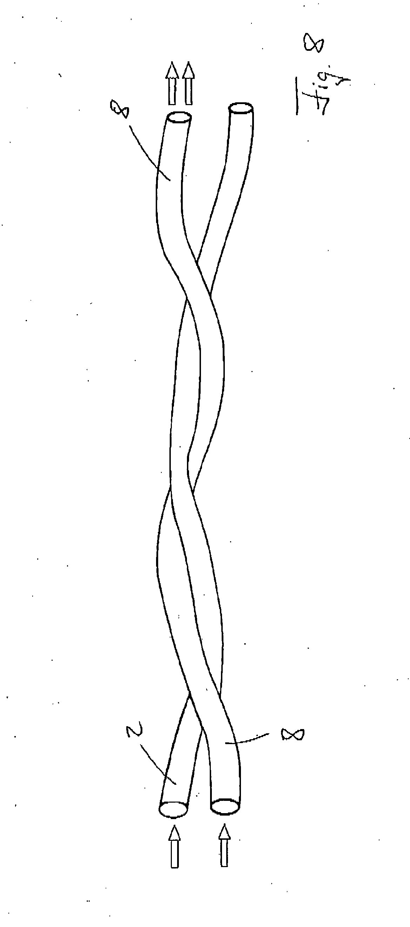

As can be seen in Figure 8, a coupling arrangement 20 (WDM) mainly consists of the pump fibre 2 and the signal fibre 8 being twisted. The pump fibre 2 guides light from the pump diode 24 shown in Figure 6, while the signal fibre 8 guides light coming from the seed source 26 in Figure 6. The pump fibre 2 might for example have a mode field diameter of 4.6 $\mu$m and a numerical aperture of 0.13. The signal fibre 8 might for example have a mode field diameter of 11 $\mu$m and a numerical aperture of 0.11.

Light coming from the pump diode 24 and the seed source 26 shown in Figure 6 enter the wavelength division multiplexer from the left side in Figure 8. This is illustrated by the two arrows on the left side. The goal of the wavelength division multiplexer is to transfer at least a portion of the light coming from the pump diode 24 through the pump fibre 2 into the signal fibre 8, as illustrated by the two arrows on the right side of Figure 8.

Commercially available fused fiber couplers or wavelength division multiplexers (WDM) consist of two equal fibers with single-mode guidance in a certain wavelength interval. The lower range is limited by the occurrence of higher order modes and is called second mode cutoff. For SMF28, a commonly used single-mode fiber in telecommunication applications, the second mode cutoff wavelength is located in the range of 1250 nm. WDMs fabricated with this type of fiber are restricted in their operation window to wavelengths higher than this cutoff wavelength. For wavelengths below the cutoff, generally the transversal mode profile is a combination of multiple modes which leads to an ineffective coupling and high loss. To overcome this problem, different fibers with single-mode guidance for the respective wavelength could be employed in order to achieve a multiplexing for wavelengths with huge spacing. However, fiber couplers with different fibers, also called asymmetric fiber couplers due to their differing geometrical parameters in the interactive region, are difficult to realize. Because of the asymmetry in the interactive region the propagation constant of the fundamental mode differs in both fibers. According to the coupled mode theory a complete power transfer is only achievable for equal propagation constants in the interactive region. To realize a fused fiber coupler consisting of two different fibers with single-mode guidance for the respective wavelength with a high coupling ratio, matching of the propagation constants in the interactive region is necessary. By this way, the restriction of using two identical fibers (same parameters) for single-mode fiber components can be overcome and single-mode fibers with differing parameters can be used for the fabrication of single-mode fiber components.

With our developed manufacturing method and fiber component it is possible to multiplex two light fields of the same or different wavelength in an asymmetric fused fiber coupler. In the first step the matching of the propagation constants in the interactive region has to be realized.

**List of references**

| | |
|---|---|
| L | taper elongation |
| z | hot zone |
| X | dimension |
| Y | dimension |
| Z | dimension |
| $D_f$ | taper waist diameter |
| $D_l$ | diameter |
| ptl | pre-taper length |
| C | coupling ratio |
| T | transmission |

$n_{eff}$    effective refractive index
2      pump fibre
4      pump fibre core
6      pump fibre cladding
8      signal fibre
10     signal fibre core
12     signal fibre cladding
14     taper shape
16     coupling region
18     amplifier
20     coupling arrangement
22     Thulium doped fibre
24     pump diode
26     seed source

## Claims

1. A method for manufacturing an asymmetric coupling arrangement (20) for coupling light of one second wavelength from a pump fibre (2) into a signal fibre (8),

   - wherein the pump fibre (2) and the signal fibre (8) are different from one another,
   - wherein the method comprises the following steps:

     a) pre-tapering the pump fibre (2) or the signal fibre (8) according to a predetermined pre-taper parameter;
     b) connecting the pump fibre (2) and the signal fibre (8).

2. The method according to claim 1, wherein the signal fibre (8) is a single-mode fibre for light having a first wavelength but is a multimode fibre for light having the second wavelength,

3. The method according to claim 1 or 2, wherein the pump fibre (2) and the singnal fibre (8) are connected by fusing them together using the fused biconical taper (FBT) technique.

4. The method according to claim 1, 2 or 3, wherein the pre-taper parameter is predetermined by performing simulations using a simulation model.

5. The method according to claim 4, wherein the simulation model is a 2d-model based on the finite-difference beam propagation method.

6. The method according to claim 4 or 5, wherein in the simulation model the core-cladding Interface and the cladding-air interface are considered, a parabolic taper shape is assumed and the glass volume is conserved to calculate the diameter of the taper waist.

7. The method according to any of the claims 4 to 6, wherein in the model the overlap of the fibres (2, 8) during the fabrication process is implemented.

8. The method according to any of the claims 3 to 7, wherein during the fusing both fibres (2, 8) are twisted and fused with a special high-temperature flame.

9. The method according to any of the preceding claims, wherein an output at the fibre ports is monitored online during fabrication process.

10. An asymmetric coupling arrangement (20) for coupling light of one second wavelength from a pump fibre (2) into a signal fibre (8)

    - wherein the pump fibre (2) and the signal fibre (8) are different from one another,
    - wherein the propagation constants of the pump fibre (2) and the signal fibre (8) match in an interactive region.

11. The coupling arrangement (20) according to claim 10, wherein the signal fibre (8) is a single-mode fibre for light having a first wavelength but is a multimode fibre for light having the second wavelength,

12. The coupling arrangement (20) according to claim 10 or 11, wherein the first wavelength and the second wavelength are between 400 nm and 2300 nm, preferably between 400 nm and 2100 nm, more preferably between 633 nm and 2000 nm, yet more preferably between 795 nm and $2\mu$m.

13. The coupling arrangement (20) according to claim 10, 11 or 12, wherein the achieved coupling efficiency is larger than 90 % for each wavelength.

14. An all-fibre core pumped rare earth doped amplifier (18) comprising an asymmetric coupling arrangement (20) according to any of the claims 10 to 13.

15. The amplifier (18) according to claim 14 consisting of the asymmetric coupling arrangement (20) according to any of the claims 10 to 13, a rare earth doped fibre (22), a single-mode pump diode (24) and a cw seed source (26).

16. The amplifier (18) according to claim 15, wherein the single-mode pump diode (24) and the cw seed source (26) operate at wavelengths of 795 nm and 1980 nm, respectively.

17. The amplifier (18) according to any of the claims 14 to 16, wherein the rare earth doped amplifier (18) is a Thulium doped fibre (TDF) amplifier (18).

Fig. 1

Fig. 2

Fig. 3

Fig. 4

Fig. 5

Fig. 6

EP 2 618 192 A1

Fig. 7

Europäisches
Patentamt

European
Patent Office

Office européen
des brevets

# EUROPEAN SEARCH REPORT

Application Number

EP 13 00 0270

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 577 259 A1 (NORTHERN TELECOM LTD [CA]) 5 January 1994 (1994-01-05) | 1-3,8-17 | INV. G02B6/287 H01S3/067 |
| Y | * the whole document * | 4-7 | |
| A | EP 0 148 569 A1 (STANDARD TELEPHONES CABLES LTD [GB]) 17 July 1985 (1985-07-17) * page 6, line 5 - page 9, line 15; figure 3 * | 1-17 | |
| Y,D | CHIANG: OPT. LETT., vol. 12, no. 6, 1987, pages 431-433, XP002695694, * the whole document * | 4-7 | |
| Y,D | W.K. BURNS; M. ABEBE; C.A. VILLARRUEL: APPL. OPTICS, vol. 24, 1985, pages 2753-2755, XP002695695, * the whole document * | 4-7 | |
| Y | RSoft: "BeamPROP Product Overview", , pages 1-2, XP002695696, Retrieved from the Internet: URL:http://www.rsoftdesign.com/products.php?sub=Component+Design&itm=BeamPROP [retrieved on 2013-04-18] * the whole document * | 4-7 | TECHNICAL FIELDS SEARCHED (IPC) G02B H01S |

The present search report has been drawn up for all claims

| Place of search | Date of completion of the search | Examiner |
|---|---|---|
| Munich | 19 April 2013 | Frisch, Anna Maria |

## ANNEX TO THE EUROPEAN SEARCH REPORT
## ON EUROPEAN PATENT APPLICATION NO.

EP 13 00 0270

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2013

| Patent document cited in search report | | Publication date | Patent family member(s) | | Publication date |
|---|---|---|---|---|---|
| EP 0577259 | A1 | 05-01-1994 | AU | 4126593 A | 06-01-1994 |
| | | | DE | 69300299 D1 | 31-08-1995 |
| | | | DE | 69300299 T2 | 11-01-1996 |
| | | | EP | 0577259 A1 | 05-01-1994 |
| | | | GB | 2268621 A | 12-01-1994 |
| | | | JP | H06342951 A | 13-12-1994 |
| | | | US | 5513033 A | 30-04-1996 |
| EP 0148569 | A1 | 17-07-1985 | AU | 573646 B2 | 16-06-1988 |
| | | | AU | 3565084 A | 06-06-1985 |
| | | | CA | 1239823 A1 | 02-08-1988 |
| | | | DE | 3468745 D1 | 18-02-1988 |
| | | | DK | 572484 A | 31-05-1985 |
| | | | EP | 0148569 A1 | 17-07-1985 |
| | | | ES | 8606675 A1 | 01-10-1986 |
| | | | GB | 2150703 A | 03-07-1985 |
| | | | JP | H0750209 B2 | 31-05-1995 |
| | | | JP | S60134208 A | 17-07-1985 |
| | | | US | 4591372 A | 27-05-1986 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 4798436 A

**Non-patent literature cited in the description**

• **B.S. KAWASAKI ; K.O. HILL ; R.G. LAMONT.** Biconical-taper single-mode fiber coupler. *Opt. Lett,* 1981, vol. 6, 327-328
• **MORTIMORE, DB.** Wavelength-flattened fused couplers. *Electronic Letters,* 1985, vol. 21 (17), 742

• **CHIANG.** *Opt. Lett.,* 1987, vol. 12, 431-433
• **W.K. BURNS ; M. ABEBE ; C.A. VILLARRUEL.** *Appl. Optics,* 1985, vol. 24, 2753-2755